# EUROPÄISCHE PATENTSCHRIFT

(11) **EP 4 090 866 B1**
(45) Veröffentlichungstag und Bekanntmachung des Hinweises auf die Patenterteilung: **25.11.2026**
(21) Anmeldenummer: 21700704.6
(22) Anmeldetag: 13.01.2021
(51) Int. Cl.: F16J 15/02, B65D 25/00, H01M 8/026

(54) **GEHÄUSEDICHTUNG, VERFAHREN ZUM AUTOMATISIERTEN APPLIZIEREN EINER GEHÄUSEDICHTUNG SOWIE GEHÄUSE UMFASSEND EINE GEHÄUSEDICHTUNG**
HOUSING SEAL, METHOD FOR THE AUTOMATED APPLICATION OF A HOUSING SEAL, AND HOUSING COMPRISING A HOUSING SEAL
JOINT D'ÉTANCHÉITÉ DE BOÎTIER, PROCÉDÉ D'APPLICATION AUTOMATISÉE D'UN JOINT D'ÉTANCHÉITÉ DE BOÎTIER ET BOÎTIER COMPRENANT UN JOINT D'ÉTANCHÉITÉ DE BOÎTIER

(30) Priorität: 15.01.2020 DE 102020200450
(43) Veröffentlichungstag der Anmeldung: 23.11.2022
(73) Patentinhaber: tesa SE, 22848 Norderstedt (DE)
(72) Erfinder: AKIN, Deniz Nick, 22305 Hamburg (DE); WATZKE, Wilhelm, 22303 Hamburg (DE); WANG, Li, 22527 Hamburg (DE); ELSENBACH, Kim, 22941 Bargteheide (DE)
(74) Vertreter: tesa SE
(86) Internationale Anmeldenummer: PCT/EP2021/050584
(87) Internationale Veröffentlichungsnummer: WO 2021/144306

(56) Entgegenhaltungen:
- EP-A1- 2 194 108
- EP-A2- 1 235 007
- EP-A2- 2 541 104
- DE-A1- 10 308 375
- JP-A- 2014 142 379
- JP-A- 2015 041 072

## Beschreibung

Die Erfindung betrifft ein Gehäuse umfassend eine Gehäusedichtung. Die Erfindung betrifft auch ein Verfahren zum automatisierten Applizieren einer Gehäusedichtung

Die Erfindung betrifft das technische Gebiet der Dichtungen, wie sie im Haushalt und in der Industrie vielfach zum Abdichten und Verhindern einer Fluidkommunikation zwischen zwei Volumen eingesetzt werden. Spezifischer wird ein zum Abdichten eine Gehäusedichtung vorgeschlagen, wobei die Dichtung nicht in sich Geschlossen ist, sondern aus endlich langen Dichtstreifen besteht.

Für viele Konstruktionen auf unterschiedlichen Gebieten der Technik, beispielsweise im Bauwesen und im Fahrzeugbau, werden Abdichtungen benötigt. Die dafür verwendeten Dichtelemente sollen Spalte, wie sie beim Verbinden zweier Bauteile nahezu unvermeidlich entstehen, häufig gegen das Eindringen von Feuchtigkeit und Luft abdichten, um dahinter liegende Teile vor dadurch hervorgerufenen Schäden, z.B. vor Korrosion, zu bewahren. Mechanische Verbindungen, wie sie z.B. durch Schrauben bewirkt werden, sind in aller Regel nicht in der Lage, eine ausreichende Abdichtung zu bewirken.

Häufig werden daher z.B. Silikon-Dichtmassen verwendet, um eine entsprechende Versiegelung der hergestellten Verbindungen zu erreichen. Derartige Dichtmassen lassen sich recht zuverlässig verarbeiten, benötigen jedoch eine bestimmte Zeit zum Aushärten und verursachen damit häufig prozesstechnische Schwierigkeiten. Ähnlich verhält es sich mit anderen strukturellen Kleb- bzw. Dichtstoffen, z.B. mit solchen auf Basis von Epoxiden oder Polyurethanen.

Auch Silikonschäume werden als Dichtmassen eingesetzt, sie zeichnen sich durch gute Flammschutzeigenschaften und ihre Wiederverwendbarkeit aus. Andererseits ist es schwierig, sie in einem automatisierten Prozess zu verarbeiten, zudem sind sie vergleichsweise teuer.

Butyl-Dichtmassen sind etabliert und preiswert, andererseits hinsichtlich ihrer Dosierung schwierig zu kontrollieren und wenig alterungsbeständig. Zudem werden sie bei höheren Anpressdrücken häufig aus dem Dichtspalt gequetscht.

Elastische Dichtstoffe wie Gummis oder auch Styrol-Butadien-Kautschuke bieten bewährte Abdichtungseigenschaften und sind zudem sehr temperaturstabil. Da sie nicht selbsthaftend sind, ist ihre Handhabung allerdings eher schwierig; zudem sind sie unflexibel, weshalb das jeweilige Dichtelement daher exakt zum abzudichtenden Spalt passen muss.

Polyurethanschäume zeigen ein gutes Kompressionsverhalten und lassen sich automatisiert verarbeiten; zudem sind sogenannte foam-in-place-Anwendungen möglich. Nachteilig sind Schwankungen in den Abmessungen des betreffenden Schaums, zudem sind diese Stoffe anfällig für Korrosion und Abbau unter dem Einfluss bestimmter Reinigungsmittel.

Ein ähnliches Eigenschaftsprofil zeigen EPDM-Schäume; auch mit ihnen lässt sich wegen ihrer unregelmäßigen Oberflächengestaltung nur eine begrenzte Abdichtungswirkung erzielen.

Aus der EP 3 346 518 A1 ist eine Dichtung bekannt, die auf einen Gehäusedeckel respektive eine Gehäusewanne eines Batteriemoduls aufgebracht wird. Dabei wird ein Dichtmaterial in eine Vertiefung eingelassen, um eine Dichtwirkung zu verbessern. Die Dichtung ist eine "formin-place foam gaskets" (FIPFG), wobei flüssiger Schaum auf einen Gehäusedeckel oder - wanne aufgebracht wird. Diese Anwendung hat die vorgenannten Nachteile, die geschäumte oder flüssig aufgetragene Dichtmassen mit sich bringen.

Aus der DE 9 106 710 U1 ist eine mehrteilige Flachdichtung bekannt bei der eine Flachdichtung aus mehreren Abschnitten eines herkömmlichen Dichtungsmaterials zusammengesetzt wird. Die Teile werden über komplementär ausgeführte mäanderförmige meanderförmige Schnitte miteinander verbunden, um einen Formschluss an den Kontaktstellen zu erreichen.

Daran ist nachteilig, dass die Teile aus der die Flachdichtung zusammengesetzt wird in Herstellung und Verarbeitung aufwendig ist. Auch der Applikationsprozess ist sehr aufwendig, da die Teile passend ineinander gesetzt werden müssen. Die beschriebene mehrteilige Flachdichtung ist für eine automatisierte Applikation wenig bis gar nicht geeignet, da die Anforderungen an die Applikationspräzision sehr hoch sind.

Aus der DE 20 2018 105 005 U1 ist eine mehrteilige Flachdichtung mit Metalleinlage und Positionierstiften bekannt. Die Metalleinlage dient als "Positionierschiene" für die daran angespritzte Elastomerdichtung. Die Positionierschienen können aneinandergesetzt werden und so größere Dichtungen zusammengesetzte werden, ohne dass dafür große Stanzteile erzeugt werden müssen. Das beschriebene Dichtungskonzept ist sehr komplex in Herstellung und Anwendung, da es aus verschiedenen Komponenten zusammengesetzt wird. Insbesondere sind die Abschnitte kein Endlosmaterial, sondern besteht aus Metallabschnitten die einzeln gefertigt werden und an die Dichtungsform angepasst werden müssen.

Aus der DE 103 08 375 A1 ist ein Gehäusedichtungskonzept für eine Pumpe, insbesondere für Vakuumpumpe bekannt, wobei eines der zu fügenden Gehäuseteile einen Nut aufweist, die mindestens eine geneigte Fläche aufweist, wobei die Nut zur Aufnahme von Flüssigdichtmasse vorgesehen ist.

Die EP 1 235 007 A2 offenbart eine mehrteilige Flachdichtung, die mindestens an den Trennstellen zwischen den Dichtungsteilen mit einem Dichtungsmittel versehen ist, das durch den beim Einbau der Dichtung erzeugten Druck die Trennstellen verschließt.

Die EP 2 541 104 A2 beschreibt eine Dichtung, umfassend eine Klebefolie und eine auf eine Oberfläche der Klebefolie laminierte Substratfolie.

Mit der EP 2 194 108 A1 ist ein Dichtungsmaterial mit ausgezeichneter Wasserbeständigkeit für lange Zeit bekannt geworden. Das Dichtungsmaterial umfasst: eine Gummiharzfolie und eine thermoplastische Harzschaumschicht, die zumindest auf einer Oberfläche der Gummiharzfolie ausgebildet ist. Aus der JP 2014 142 379 A, ist eine flache Anzeigetafel bestehend aus mehreren Schichten, bekannt, gemäß der Präambel des Anspruchs 1, wobei die Anzeigetafel mit einem doppelseitiger Klebeband auf einer Platte verklebt wird. Das Klebeband verklebt in Form eines rechteckigen Rahmens die flache Anzeigetafel und die Platte.

Die JP 2015041072 A offenbart die Verklebung beispielsweise eines Displays auf einem Gehäuse, wobei die Verklebung durch ein Klebeband erfolgt, das in Form eines rechteckigen Rahmens aufgebracht wird.

Es besteht daher ein Bedarf an einfach anwendbaren und verarbeitbaren Systemen zur zuverlässigen Abdichtung von Verbindungen zwischen Bauteilen.

Aufgabe der Erfindung ist es, ein einfach zu applizierendes Dichtmaterial mit hoher Abdichtungswirkung gegen Luft und Feuchtigkeit bereitzustellen, das zudem die Möglichkeit bietet, die abgedichteten Öffnung bzw. Verbindungsstelle unkompliziert wieder öffnen und wieder schließen zu können.

Eine Anwendung liegt im Bereich der Batteriemodule. Sie enthalten eine Vielzahl von Batteriezellen, die in einem Gehäuse vor mechanischer Einwirkung von außen, aber auch vor dem Einwirken von Feuchtigkeit geschützt werden müssen. Dazu wird üblicherweise zwischen Gehäusedeckel und Gehäusewanne ein Flansch ausgebildet und durch eine Dichtmasse abgedichtet. Die Verwendung von Dichtmassen hat die zuvor beschriebenen Nachteile.

Es ist Aufgabe der Erfindung die eingangs genannten Nachteile von Dichtmassen zu überwinden. Zudem ist es Aufgabe der Erfindung eine einfache und zuverlässige automatisierte Applikation der Gehäusedichtung zu ermöglichen.

Die Aufgabe wird in ihrem ersten Aspekt gelöst durch ein Gehäuse umfassend eine Gehäusedichtung mit den Merkmalen des Anspruchs 1.

Demgemäß betrifft die Erfindung ein Gehäuse umfassend
- ein erstes Gehäuseelement (1),
- ein zweites Gehäuseelement (2) und
eine zwischen dem ersten Gehäuseelement und dem zweiten Gehäuseelement angeordnete Gehäusedichtung zur Abdichtung eines Gehäuseinneren gegenüber einem Gehäuseäußeren, umfassend einen
elastischen Klebestreifen der zwischen einem ersten Gehäuseelement und einem zweiten Gehäuseelement angeordnet ist,
dadurch gekennzeichnet, dass
   - der Klebestreifen einen ersten Endabschnitt mit einer ersten Kantenfläche und einen zweiten Endabschnitt mit einer zweiten Kantenfläche umfasst, und derart zwischen dem ersten Gehäuseelement und dem zweiten Gehäuseelement angeordnet ist, dass
      ∘ die erste und zweite Kantenfläche im Wesentlichen in einer Ebene liegen, und
      ∘ der Klebestreifen zwischen dem ersten Gehäuseelement und dem zweiten Gehäuseelement in einem geschlossenen Umlauf angeordnet ist, und
      o die erste Kantenfläche des Klebestreifens mit der zweiten Kantenfläche des Klebestreifens in Kontakt steht und einen Dichtspalt bildet,
sodass wenn das erste Gehäuseelement und das zweite Gehäuseelement mit einer Kraft F gegeneinandergepresst werden, der elastische Klebestreifen gestaucht wird und dieser in Richtung der Kantenflächen expandiert, wodurch die erste Kantenfläche des ersten Klebestreifens und die zweite Kantenfläche des Klebestreifens gegeneinandergepresst werden und den Dichtspalt abdichten, wodurch eine Fluidkommunikation zwischen dem Gehäuseinneren und dem Gehäuseäußeren unterbunden wird.

Demgemäß erfolgt die Abdichtung nun durch ein Klebeband welches zu Klebestreifen abgelängt wird und in einer spezifischen Anordnung auf Gehäuseelemente automatisiert aufgetragen werden kann und so eine 100% automatisierte Applikation und Abdichtung ermöglicht.

Der Erfindung liegt die Erkenntnis zugrunde, dass durch eine erfindungsgemäße Anordnung auch aus einem kontinuierlichen elastischen Klebeband, also keiner gestanzten Flachdichtung, sondern einem von einer Klebebandrolle abgerollten und abgetrennten Klebestreifen, ein dichtender Ringschluss aus einem nicht in sich geschlossenen elastischen Klebestreifen erzeugt werden kann, der Wasserdichtigkeits- und Korrosionstests standhält. Insbesondere erfüllt diese Anordnung Anforderungen von Wasserdichtigkeits- und Korrosionstests zum Verschluss von Batteriegehäsen in E-Mobilitybereich. Eine Besonderheit der hier beschriebenen Erfindung besteht also darin, dass die Gehäusedichtung aus nur einem Klebestreifen aufgebaut ist. Üblicherweise werden in sich geschlossene Dichtungen, wie Dichtringe oder eine aus einem Bogen gestanzte Flachdichtung eingesetzt. Diese weisen keinen Spalt oder Unterbrechung auf, sondern bilden einen in sich geschlossenen und nicht unterbrochenen Umlauf.

Erfindungsgemäß wird ein endlich langer und nicht in sich geschlossener elastischer Klebestreifen derart auf einem Gehäuseelement, beispielsweise einem Dichtflansch eines Gehäuses, angeordnet, dass beim Verschließen des Gehäuses eine Dichtwirkung einsetzt, die das Eindringen von Feuchtigkeit und Luft in das Gehäuseinnere zuverlässig verhindert. Dabei bildet der Klebestreifen einen nicht vollständig geschlossenen Umlauf. Der Umlauf kann einen beliebigen Verlauf oder Kontur beschreiben. Der Umlauf ist nicht geschlossen, da er durch den Dichtspalt unterbrochen ist. Der Umlauf des Klebestreifens befindet sich vorzugsweise in einer Ebene, der Klebestreifen ist also in einer Ebene liegend auf einem Gehäuseelement aufgebracht, also aufgeklebt.

Das erfindungsgemäß eingesetzte Dichtmaterial wird durch elastische Klebestreifen gebildet, die als Abschnitte eines Klebebandes bereitgestellt werden. Üblicherweise werden Klebebänder in festen Längen wie zum Beispiel als Meterware oder als Endlosware in Form von Rollen (archimedische Spirale) oder auf einen Kern gewickelten Spulen zur Verfügung gestellt.

Sofern ein im Folgenden ein Klebestreifen erwähnt wird, ist stets ein elastischer Klebestreifen gemeint.

Im Sinne der Erfindung werden unter einem Klebeband alle flächigen Gebilde wie in zwei Dimensionen ausgedehnte Folien oder Folienabschnitte, Bänder mit ausgedehnter Länge und begrenzter Breite, Bandabschnitte und dergleichen, und letztlich auch Stanzlinge verstanden. Ein Klebeband im Sinne der Erfindung kann ein- oder beidseitig mit einer Klebmasse beaufschlagt sein. Üblicherweise weisen Klebebänder Lauflängen von wenigen 10 m bis 30.000 m auf. Übliche Breiten von Klebebandrollen oder Klebebandspulen sind 10, 15, 19, 25 und 30 mm. Aber auch andere Lauflängen und Klebebandbreiten existieren und sind von der erfindungsgemäßen Lehre nicht ausgenommen. Das Klebeband kann sowohl in Form einer Rolle, also in Form einer archimedischen Spirale auf sich selbst aufgerollt, oder auf einem Spulenkörper aufgewickelt sein.

Ein Klebeband weist eine flächig ausgedehnte Oberseite und eine der Oberseite gegenüberliegende Unterseite auf. Oberseite und Unterseite sind im Wesentlichen koplanar in einem Abstand d, der der Dicke des Klebebandes entspricht, angeordnet und weisen jeweils eine Breite b auf. An den Kanten des Klebebandes entstehen Kantenflächen, deren Flächennormalen im Wesentlichen senkrecht zu den Flächennormalen der Oberseite und der Unterseite angeordnet sind. Dass die Kantenflächen nahezu senkrecht sind, resultiert aus der Herstellung eines Klebebandes aus einer Mutterrolle auf hochpräzisen Fertigungsanlagen, bei dem mehrere Klebebänder von einer Mutterrolle abgestochen werden, also die Mutterrolle beispielsweise durch Rollenmessern vereinzelt wird. Durch die Fertigungsanlagen wird auch erreicht, dass die Kantenflächen eines Klebebandes nahezu plan sind, also gleichmäßig flach sowohl in Richtung der Längsrichtung des Klebebandes, also auch über die Dicke d des Klebebandes. Die Breite b eines Klebebandes ist üblicherweise größer oder mindestens gleich der Dicke d. Die Kantenflächen haben somit eine hohe Oberflächenqualität und sind exakt in ihrer geometrischen Anordnung gegenüber der Ober- und Unterseite des Klebebandes. Die Längsrichtung ergibt sich durch die Richtung des Klebebandes in der es Aufgewickelt oder abgewickelt wird. In Längsrichtung hat ein Klebeband die längste Erstreckung.

Im Sinne der Erfindung soll unter einem Klebestreifen, ein von einem Klebeband abgetrennter Abschnitt verstanden werden. Der allgemeine Ausdruck "Klebestreifen" umfasst im Sinne dieser Erfindung alle ein- oder beidseitig selbstklebend ausgestatteten flächigen Gebilde wie in zwei Dimensionen ausgedehnte Folien oder Folienabschnitte, Bänder mit ausgedehnter Länge und begrenzter Breite, Bandabschnitte, Stanzlinge und dergleichen sowie entsprechende Mehrschichtanordnungen. Die Geometrien und Eigenschaften des zuvor beschriebenen Klebebandes gelten ebenso für Klebestreifen, da ein Klebestreifen im Sinne der Erfindung lediglich ein abgetrennter Teil eines Klebebandes ist.

Die Länge eines Klebestreifens ist also immer kleiner als die Länge eines Klebebands. Ein Klebestreifen weist durch das Abtrennen von dem Klebeband in der Regel zwei Schnittkanten auf. Die Schnittkanten bilden die Stirnseiten des Klebestreifens. Diese sind üblicherweise im Wesentlichen senkrecht angeordnet. Da ein Klebestreifen jedoch häufig erst bei der Verwendung durch einen Werker oder durch eine Maschine abgetrennt wird, ist hier nicht von einer so hohen Oberflächenqualität und exakten geometrischen Anordnung der Stirnseite verglichen mit der Oberseite- und der Unterseite des Klebestreifens auszugehen oder den Kantenflächen.

Die Erfindung berücksichtigt diesen Anwendungstechnischen Effekt in geschickter Weise, indem die Anordnung der Gehäusedichtung vorsieht, dass nur die wohldefinierten Kantenflächen der Klebebandstreifen miteinander in Kontakt gebracht werden und den Dichtspalt bilden.

Durch die erfindungsgemäße Anordnung der Gehäusedichtung, wird wirksam vermieden, dass am Applikationsort, z.B. der Werks- oder Fertigungshalle, Schnittkanten erzeugte verwendet werden, die einen Dichtspalt bilden und diesen abdichten. Die Erfindung sieht es stattdessen vor, dass die mit einer hohen Fertigungspräzision herstellbaren Kantenflächen des Klebestreifens eingesetzt werden, um werksseitig einen Dichtspalt herzustellen.

Darüber hinaus berücksichtigt die erfindungsgemäße Gehäusedichtung auch die Tatsache, dass in einem automatisierten Applikationsprozess die Stirnseiten der Klebestreifen durch einen Applikator nicht beliebig nahe oder sogar in Kontakt stehend auf ein Gehäuseelement aufgebracht werden können. Ein automatisierter Klebeband-Applikator, vorzugsweise ein robotergeführter Klebeband-Applikator, unterliegt Limitierungen die das Applizieren von Klebebändern von fortlaufenden Abschnitten, die jeweils über ihre Stirnseiten in Kontakt stehen, verhindern oder zumindest stark erschweren. Die erfindungsgemäße Gehäusedichtung umgeht dieses aus der Anwendung kommende Problem, indem der Klebestreifen so versetzt nebeneinander angeordnet wird, dass ein Abschnitt der ersten Kantenfläche des Klebestreifens mit einem Abschnitt der zweiten Kantenfläche des Klebestreifens in Kontakt steht und an diesem Kontaktbereich einen Dichtspalt bildet. Die unsauber abgetrennten Stirnseiten werden nicht verwendet. Dadurch wird insbesondere die Oberflächenqualität der Stirnseiten des ersten Klebestreifens und deren exakten geometrischen Anordnung zur Erreichung der Dichtwirkung der Gehäusedichtung vernachlässigbar.

Unter elastisch soll die Eigenschaft eines Klebestreifens oder Klebebandes verstanden werden unter Krafteinwirkung seine geometrische Form zu verändern und bei Wegfall der einwirkenden Kraft in die ursprüngliche vor der Krafteinwirkung vorliegenden Form zurückzukehren. Dabei sollen unter dem Begriff elastisch sowohl linear-elastische Verhalten der Klebestreifen als auch nicht-linear elastische Verhalten der Klebestreifen verstanden werden. Da die Klebestreifen Polymermaterialien umfassen, ist unter dem Begriff elastisch auch ein viskoelastisches Verhalten zu verstehen.

Wenn das erste Gehäuseelement und das zweite Gehäuseelement mit einer Kraft F gegeneinandergepresst werden, wird der elastische Klebestreifen gestaucht, also verformt, und expandieren in Richtung der Kantenflächen, also quer zur Längsrichtung des Klebestreifen. Dabei erfolgt die Krafteinwirkung flächig, vorzugsweise gleichverteilt über die gesamte Kontaktfläche zwischen dem Klebestreifen und dem ersten und zweiten Gehäuseelement, also gleichmäßig verteilt über die Ober- und Unterseite des Klebestreifens und nicht etwa punktuell.

Durch die Expansion der Klebestreifen in Richtung der Kantenflächen werden die in Kontakt stehenden Kantenflächen des Klebestreifens gegeneinandergepresst und dichten so den Dichtspalt ab. So wird dann eine Fluidkommunikation zwischen dem Gehäuseinneren und dem Gehäuseäußeren zuverlässig unterbunden.

Da die Gehäusedichtung nicht in sich geschlossen ist, sondern aus einem streifenförmigen endlichen Klebestreifen besteht, ist der Dichtspalt die Schwachstelle für die Dichtheit. Wie sich gezeigt hat, hat die Anordnung des Klebestreifens eine große Bedeutung. Sie hat bedeutenden Einfluss zum einen auf die Dichtheit der Gehäusedichtung und zum anderen auf die Prozesssicherheit der automatisierten Applikation. Aber auch die Eigenschaften der Klebstreifen und deren Schichtaufbau müssen auf diese Anwendung abgestimmt sein.

Der Klebestreifen umfassen eine Haftklebmasse, also eine Klebmasse, die bereits unter relativ schwachem Andruck eine dauerhafte Verbindung mit fast allen Haftgründen erlaubt. Eine Haftklebmasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebmasse beruht auf ihren adhäsiven Eigenschaften und die Wiederablösbarkeit auf ihren kohäsiven Eigenschaften.

Eine Klebmasse im Sinne der Erfindung kann ein Kleber auf Basis von Naturkautschuk, Synthesekautschuk oder Acrylat umfassen. Aber auch andere Kleber können eingesetzt werden. Die Klebmasse kann neben dem Kleber zusätzlich Stoffe umfassen wie z.B. chemische oder mechanische Stabilisatoren, Farbpigmente, Fasern, Granulate, phosphoreszierende Stoffe, medizinisch wirksame Stoffe oder Medikamente, magnetische oder magnetisierbare Partikel, oder andere Stoffe, die die Eigenschaften der Klebmasse konditionieren können. Insbesondere ist unter einer Klebmasse auch eine Haftklebmasse zu verstehen.

Unter einer "Haftklebmasse" wird entsprechend dem allgemeinen Verständnis des Fachmanns ein viskoelastischer Klebstoff verstanden, dessen abgebundener, trockener Film bei Raumtemperatur permanent klebrig ist und klebfähig bleibt sowie durch leichten Anpressdruck auf einer Vielzahl von Substraten verklebt werden kann.

Dadurch, dass die erfindungsgemäße Gehäusedichtung auf einer Seite auf eines der Gehäuseelemente aufgeklebt ist, verbleibt die Gehäusedichtung an dem Ort an dem sie appliziert wurde. Insbesondre fällt sie nicht heraus, wie dies bei Dichtringen, Dichtschnüren oder nicht selbstklebenden Flachdichtungen der Fall ist. Dadurch wird neben den sich daraus ergebenden handhabungstechnischen Vorteilen sichergestellt, dass die Dichtwirkung der Gehäusedichtung trotz des Öffnens des Gehäuses und Trennens der Gehäuseelemente voneinander, die Dichtwirkung bei Wiederverschließen wieder erreicht wird, da sich die Anordnung des Klebestreifens nicht ändert.

In der Regel besteht ein Klebeband aus einem Träger und mindestens einer darauf aufgebrachten Klebmasse. Es existieren aber auch Klebebänder ohne Träger. Besonders bevorzugt ist es, dass der Klebestreifen trägerlos aufgebaut ist, der Träger also durch eine Klebmasse selbst gebildet ist und die Klebmasse eine hohe Kohäsion aufweist.

Wie sich gezeigt hat, lässt sich die erfindungsgemäße Anordnung eines Klebestreifens vorteilhaft zum Abdichten von Gehäusen verwenden, wobei es zum einen eine einfache, sichere und exakte Applikation erlaubt und zum anderen eine einfache Demontage und sogar Wiederverschließbarkeit der Gehäuseelemente eines Gehäuses ermöglicht.

Die Gehäusedichtung kann vorteilhaft weitergebildet werden, indem eine Längsrichtung eines ersten Endabschnitts des Klebestreifens und eine Längsrichtung eines zweiten Endabschnitts des Klebestreifens zumindest abschnittsweise parallel verlaufen.

Durch die zumindest Abschnittweise parallele Anordnung des ersten Endabschnitts zu dem zweiten Endabschnitt sind auch die erste und zweite Kantenfläche des Klebestreifens parallel angeordnet. Die den Dichtspalt bildende und in Kontakt stehenden Kantenflächen sind so plan aufeinanderliegend angeordnet. Dadurch wird der Dichtspalt besonders gleichmäßig abgedichtet, da bei der Abdichtung die Kraft die durch die Expansion der Klebestreifen auf die in Kontakt stehenden Kantenflächen einwirkt, gleichmäßig verteilt ist.

Unter einer Längsrichtung des Klebebands wird diejenige Richtung verstanden, in der ein Klebeband üblicherweise abgerollt wird. In der Regel ist diese Richtung durch die längliche Ausdehnung des Klebebandes bestimmt. Bei Klebebandabschnitten oder Klebebandzuschnitten, deren Ab- oder Zuschnitt kürzer ist als die Breite des Klebmassenbereiches, ist die Längsrichtung des Klebebandes durch die kürzere Ausdehnung des Ab- oder Zuschnitts bestimmt. Unter Ab- oder Zuschnitten sollen auch Stanzlinge oder Etiketten verstanden werden.

Durch die parallele Anordnung sind insbesondere die Kantenflächen koplanar, also in einer Ebene liegend, angeordnet, was zu einer besseren Dichtwirkung im Dichtspalt führt, wenn das erste Gehäuseelement und das zweite Gehäuseelement mit einer Kraft F gegeneinandergepresst werden.

Diese Anordnung vereinfacht auch das Applizieren der Klebestreifen, da während eines Applikationsprozesses der Klebestreifen im Bereich der in Kontakt stehenden Kantenflächen nur geradlinig bewegt wird, also ohne eine Krümmung oder Kurve zu beschreiben. Dies führt auch dazu, dass der Applikationsprozess einfacher und zuverlässiger durchgeführt werden kann und eine Dichtwirkung der Gehäusedichtung gewährleistet werden kann.

Es ist aber ebenso möglich, den Klebestreifen im Bereich der in Kontakt stehenden Kantenflächen eine Kurve beschreiben zu lassen. Es hat sich gezeigt, dass auch bei solch einer Anordnung eine ausreichende Dichtwirkung erreicht werden kann.

Der Aufbau bzw. die Schichtabfolge des Klebestreifens umfasst mehrere Varianten. In einer bevorzugten Ausgestaltung des elastischen Klebestreifens umfasst der Klebestreifen eine Polymerschaumschicht und eine Haftklebmasseschicht. Die nicht beschichtete Seite der Polymerschaumschicht weist eine schwächere Klebkraft als die Haftklebmasseschicht. Bevorzugt enthält die Polymerschaumschicht mindestens ein Poly(meth)acrylat.

Die Gehäusedichtung kann vorteilhaft weitergebildet werden, indem der Klebestreifen eine Polymerschaumschicht umfasst und eine erste Seite der Polymerschaumschicht eine Haftklebmasseschicht aufweist.

Die Polymerschaumschicht, insbesondere das Matrixmaterial der Polymerschaumschicht, enthält mindestens ein Poly(meth)acrylat. Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält die Polymerschaumschicht Poly(meth)acrylate zu insgesamt 40 bis 99,9 Gew.-%, stärker bevorzugt zu insgesamt 60 bis 98 Gew.-%, insbesondere zu insgesamt 75 bis 95 Gew.-%, beispielsweise zu insgesamt 80 bis 90 Gew.-%, jeweils bezogen auf das Gesamtgewicht der Polymerschaumschicht. Es können ein (einziges) Poly(meth)acrylat oder mehrere Poly(meth)acrylate enthalten sein; der Pluralausdruck "Poly(meth)acrylate" schließt also - auch im Fortgang der vorliegenden Beschreibung - in seiner Bedeutung ebenso wie der Ausdruck "insgesamt" sowohl das Vorliegen eines einzigen Poly(meth)acrylats als auch das Vorliegen mehrerer Poly(meth)acrylate ein.

Die Glasübergangstemperatur der Poly(meth)acrylate beträgt bevorzugt < 0 °C, stärker bevorzugt zwischen -20 und -50 °C. Die Glasübergangstemperatur von Polymeren oder von Polymerblöcken in Blockcopolymeren wird erfindungsgemäß mittels Dynamischer Scanning Kalorimetrie (DSC) bestimmt. Dazu werden ca. 5 mg einer unbehandelten Polymerprobe in ein Aluminiumtiegelchen (Volumen 25 µl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

Bevorzugt enthält das Poly(meth)acrylat zumindest ein anteilig einpolymerisiertes funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Bevorzugt sind die Poly(meth)acrylate mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Die Haftklebmasseschicht enthält bevorzugt zu mindestens 50 Gew.-%, stärker bevorzugt zu mindestens 70 Gew.-%, besonders bevorzugt zu mindestens 90 Gew.-%, insbesondere zu mindestens 95 Gew.-%, beispielsweise zu mindestens 97 Gew.-%, jeweils bezogen auf das Gesamtgewicht der Haftklebmasseschicht, ein oder mehrere Poly(meth)acrylat(e).

Insbesondere ist das Poly(meth)acrylat der äußeren Haftklebmasseschicht auf eine Monomerenzusammensetzung bestehend aus
70 bis 95 Gew.-% 2-Ethylhexylacrylat, n-Butylacrylat und/oder Isobornylacrylat; insbesondere n-Butylacrylat und 2-Ethylhexylacrylat;
1 bis 15 Gew.-% Acrylsäure; und
0 bis 15 Gew.-% Methylacrylat
zurückzuführen.

Die Poly(meth)acrylate der äußeren Haftklebmasseschicht sind bevorzugt thermisch, insbesondere kovalent und/oder koordinativ vernetzt. Bevorzugte kovalente Vernetzer Epoxyverbindungen, bevorzugte koordinative Vernetzer sind Aluminiumchelate.

Das gewichtsmittlere Molekulargewicht M_{w} der Poly(meth)acrylate der äußeren Haftklebmasseschicht beträgt bevorzugt 20.000 bis 2.000.000 g/mol, besonders bevorzugt 100.000 bis 1.500.000 g/mol, insbesondere 200.000 bis 1.200.000 g/mol. Die Angaben des mittleren Molekulargewichtes M_{w} in dieser Schrift beziehen sich auf die Bestimmung per Gelpermeationschromatographie.

Die Gehäusedichtung kann vorteilhaft weitergebildet werden, indem die Polymerschaumschicht selbst eine Haftklebmasse ist, insbesondere ein haftklebriger acrylatbasierter Polymerschaum, insbesondere mindestens ein Poly(meth)acrylat enthält. Zu den Eigenschaften und Formulierungen sei an dieser Stelle auf die vorangegangenen Ausführungen zu der Polymerschaumschicht, insbesondere das Matrixmaterial der Polymerschaumschicht verwiesen.

Dadurch kann die Gehäusedichtung von den Vorteilen die acrylatbasierte Haftklebemassen haben bei der Abdichtung profitieren. Ein acrylatbasierter Polymerschaum besitzt viskoelastische Eigenschaften. Dadurch fließen der erste und zweite Klebestreifen bei Berührung der ersten und zweiten Kantenflächen des ersten und zweiten Endabschnitts auf die erste und zweite Kantenfläche des zweiten Klebestreifens. Durch das von viskoelastischen Materialien bekannte Verhalten des Auffließens, welche mit einer starken Benetzung einer Oberfläche gleichzusetzen ist, wird die Dichtwirkung der Gehäusedichtung in dem Dichtspalt verbessert. Zudem weist ein acrylatbasierter Polymerschaum eine sehr gute Temperaturbeständigkeit in Temperaturbereichen von -20 - +120°C auf, wobei ein acrylatbasierter Polymerschaum kurzfristig sogar Temperaturen bis 220°C standhält. Zudem weisen diese Haftklebemassen hervorragenden Kälte-Schock-Resistenzen auf, was für viele Anwendungen, z. B. im Bereich des Automobilbaus, von großer Bedeutung ist. Eine besonders wichtige Eigenschaft acrylatbasierter Polymerschäume ist es, dass sie Reißdehnungen von 1000% und mehr aufweisen. Das Bedeutet, dass ein acrylatbasierter Polymerschaum besonders stark gedehnt werden kann ohne zu reißen. Diese Eigenschaft ist besonders vorteilhaft für die erfindungsgemäße Gehäusedichtung, da diese besonders stark zwischen den Gehäuseteilen verpresst werden kann. Durch die dadurch resultierende Expansion des Polymerschaums zu den Kantenflächen, wird der Dichtspalt zuverlässig abgedichtet und widersteht größeren Druckdifferenzen zwischen Gehäuseinnerem und Gehäuseäußerem. Durch die große Reißfestigkeit wird es auch ermöglicht, dass unterschiedliche Wärmeausdehnung ungleicher Materialien ausgeglichen werden können. Dadurch können die abzudichtenden Gehäuseelemente aus unterschiedlichen Materialien gefertigt sein, die sehr unterschiedliche Temperaturausdehnungskoeffizienten aufweisen. Beispielsweise kann ein Gehäusedeckel aus ABS-Material (Acrylnitril-Butadien-StyrolCopolymer) bestehen und eine Gehäusewanne aus Aluminium. Das Kunststoffmaterial weist einen wesentlich kleineren Temperaturausdehnungskoeffizienten im Vergleich zu Aluminium auf. Zudem weist der acrylatbasierte Polymerschaum hervorragende Alterungsbeständigkeit, Feuchtigkeitsbeständigkeit und Chemikalienbeständigkeit auf, was besonders vorteilhaft für die Zuverlässigkeit und Langlebigkeit der Gehäusedichtung ist.

Die Gehäusedichtung kann vorteilhaft weitergebildet werden, indem der Klebestreifen eine weitere Haftklebmasseschicht umfasst, wobei die weitere Haftklebmasseschicht auf einer zweiten Seite der Polymerschaumschicht aufgebracht ist, und die zweite Seite der ersten Seite gegenüberliegt. Die weitere Haftklebmasseschicht entspricht vorzugsweise einer der vorgenannten Formulierung der Haftklebmasseschicht.

Besonders bevorzugt ist es, dass die Klebkraft der weiteren Klebmasseschicht, die auf der zweiten Seite der Polymerschaumschicht aufgebracht ist, schwächer ist als die Klebkraft der Haftklebmasseschicht, die auf der ersten Seite der Polymerschaumschicht aufgebracht ist. Mit anderen Worten wird eine Seite der Polymerschaumschicht schwach-klebend ausgeführt, so dass die Klebkraft auf einer Seite der Polymerschaumschicht geringer ist als auf der anderen Seite. Das soll bedeuten, dass die Adhäsionskraft der schwach-klebend ausgeführten Schicht kleiner ist als die Adhäsionskraft, der Schicht mit der die elastischen Klebstreifen auf ein Gehäuseelement appliziert, also aufgeklebt, wird. Dies kann durch eine auf die Polymerschaumschicht aufgetragene Haftklebmasseschicht erreicht werden, die nur schwach-klebende Eigenschaften aufweist. Zwar haften erstes oder zweites Gehäuseelement dann stärker an der weiteren Klebmasseschicht, allerdings kann dadurch auch die Dichtwirkung zwischen dem ersten und zweiten Gehäuseelement verbessert werden. Dadurch dass die zweite Seite der Polymerschaumschicht eine weitere Klebmasseschicht aufweist, verbessert sich die Dichtwirkung zwischen Gehäuseelement und der Polymerschaumschicht, also beispielsweise auf der Oberseite der Klebestreifen. Gemeint ist hier nicht der erste und zweite Dichtspalt, sondern die senkrecht dazu angeordnete Ober- oder Unterseite des ersten und zweiten Klebestreifens die mit dem Gehäuseelementen in Kontakt stehen. Ist diese eine Seite schwach-klebend ausgeführt kann eine Fluidkommunikation auch an den Kontaktflächen zwischen Gehäuseelement und Klebesteifen (Oberseite, Unterseite der Klebestreifen) zuverlässiger verhindert werden.

Andererseits kann durch die schwach klebende Ausführung einer weiteren Klebmasseschicht sichergestellt werden, dass die Gehäusedichtung beim Lösen und Trennen der Gehäuseelemente voneinander, vollständig an demjenigen Gehäuseelement verbleibt, das mit der Haftklebmasseschicht in Kontakt steht, die die größere Klebkraft aufweist. Weist eine Seite der Klebestreifen eine ausreichend geringe Klebkraft auf, können das erste und zweite Gehäuseelement nachdem sie zusammengefügt wurden, wieder getrennt werden, ohne dass dabei die Gehäusedichtung beschädigt oder sogar zerstört wird. Die Gehäusedichtung kann daher wiederverwendet werden, was nachhaltig ist und ein erneutes Applizieren oder Anordnen einer Dichtung überflüssig macht, also Zeit spart. Dadurch wird es ermöglicht ein Gehäuse problemlos wieder zu öffnen um eine Reparatur, einen Austausch oder eine Revision von in dem Gehäuse befindlichen Komponenten durchzuführen, z.B. von Batteriekomponenten.

Die Gehäusedichtung kann vorteilhaft weitergebildet werden, indem eine zweite Seite der Polymerschaumschicht, die der ersten Seite gegenüberliegt, eine thermoplastische Folie aufweist oder die thermoplastische Folie auf der weiteren Haftklebmasseschicht aufgebracht ist.

Eine thermoplastische Folie weist keine oder nur sehr gering ausgeprägte Klebeigenschaften auf, so dass sie in jedem denkbaren Aufbau der Klebestreifen, der auf der zweiten Seite der Polymerschaumschicht eine thermoplastische Folie umfasst, eine rückstandsloses und haftkraftfreies Lösen des zweiten bzw. ersten Gehäuseelements möglich ist. Weist eine Seite der Klebestreifen eine sehr geringe oder keine Klebkraft (nicht-klebend) auf, können das erste und zweite Gehäuseelement nachdem sie zusammengefügt wurden, wieder getrennt werden, ohne dass dabei die Gehäusedichtung beschädigt oder sogar zerstört wird. Das Ablösen kann dabei rückstandfrei erfolgen. Die Gehäusedichtung kann daher wiederverwendet werden, was nachhaltig ist und ein erneutes Applizieren oder Anordnen einer Dichtung überflüssig macht, also Zeit spart. Dadurch wird es ermöglicht ein Gehäuse problemlos wieder zu öffnen um eine Reparatur, einen Austausch oder eine Revision von in dem Gehäuse befindlichen Komponenten durchzuführen.

Bevorzugt umfasst die thermoplastische Folie mindestens ein Polymer ausgewählt aus der Gruppe bestehend aus thermoplastischen Polyolefinen (TPE-E bzw. TPO), insbesondere thermoplastischen Polyolefinelastomeren (POE) und thermoplastischen Polyolefinplastomeren (POP); thermoplastischen Polystyrolelastomeren (TPE-S bzw. TPS), insbesondere Styrolblockcopolymeren (SBC); thermoplastischen Polyurethanelastomeren (TPE-U bzw. TPU); thermoplastischen Polyesterelastomeren und Copolyestern (TPE-E bzw. TPC); thermoplastischen Copolyamiden (TPE-A bzw. TPA); und thermoplastischen Vulkanisaten sowie vernetzten thermoplastischen Polyolefinelastomeren (TPE-V bzw. TPV).

Insbesondere besteht die thermoplastische Folie aus mindestens einem, besonders bevorzugt einem, Polymer ausgewählt aus der Gruppe bestehend aus thermoplastischen Polyolefinen (TPE-E bzw. TPO), insbesondere thermoplastischen Polyolefinelastomeren (POE) und thermoplastischen Polyolefinplastomeren (POP); thermoplastischen Polystyrolelastomeren (TPE-S bzw. TPS), insbesondere Styrolblockcopolymeren (SBC); thermoplastischen Polyurethanelastomeren (TPE-U bzw. TPU); thermoplastischen Polyesterelastomeren und Copolyestern (TPE-E bzw. TPC); thermoplastischen Copolyamiden (TPE-A bzw. TPA); und thermoplastischen Vulkanisaten sowie vernetzten thermoplastischen Polyolefinelastomeren (TPE-V bzw. TPV).

Besonders bevorzugt ist es, dass der Klebestreifen eine Dicke d zwischen 0,1 mm +/- 0,02 mm und 8,0 mm +/- 0,2 mm aufweist, besonders bevorzugt eine Dicke d zwischen 1,5 mm +/-0,2 mm und 3,0 mm +/- 0,2 mm aufweist.

Ist die Dicke d kleiner als 0,1 mm, kann es passieren, dass die Klebestreifen beim Zusammenpressen zwischen den Gehäuseelementen zu strak gestaucht wird und zerreißt, wodurch die Gehäusedichtung nicht mehr dicht wäre.

Ist die Dicke d größer als 8,0 mm, kann es passieren, dass die Klebestreifen beim Zusammenpressen zwischen den Gehäuseelementen sehr stark expandieren und zwischen den Gehäuseelementen herausquellen. Eine Dichtwirkung ist dann aber immer noch gegeben.

Besonders bevorzugt ist daher eine Dicke d zwischen 1,5 mm und 3,0 mm. Klebestreifen mit solchen Dicken können ausreichend Kraft beim Zusammenpressen aufnehmen aber quellen auch nicht zwischen Gehäuseelementen heraus.

Bevorzugt ist es, dass wenn das erste Gehäuseelement und das zweite Gehäuseelement mit einer Kraft F gegeneinandergepresst werden die Dicke d des Klebestreifens um 10% bis 60% verringert wird, besonders bevorzugt um 30% bis 50% verringert wird. Dadurch wird eine ausreichende Expansion des ersten und zweiten Klebestreifens erreicht, sodass der Dichtspalt abgedichtet wird. Zwischen der Verringerung der Dicke d und der Kraft F besteht ein proportionaler Zusammenhang. Je größer die Kraft F ist, die auf das erste und zweite Gehäuseelement wirkt, desto stärke wird die Dicke d des ersten und zweiten Klebestreifens verringert. Vorzugsweise wird die Dicke d zwischen 10% und 60% verringert. Durch eine mindestens 10%ige Verringerung wird erreicht, dass der Anpressdruck ausreichend groß ist und eine ausreichende Expansion der Klebestreifen zu erreichen, sodass der Dichtspalt abgedichtet wird.

Aber die Verringerung der Dicke darf auch nicht zu groß ausfallen, da sonst der Klebestreifen beim Zusammenpressen zwischen den Gehäuseelementen sehr stark expandieren und zwischen den Gehäuseelementen herausquellen könnte. Zudem kann es zu einer Schädigung der Klebestreifen kommen. Insbesondere kann, bei einem mehrschichtigen Aufbau, eine zu starke Kompression, also Verringerung der Dicke d, zu einer Delamination der Polymerschaumschicht von einer Haftklebmasseschicht oder zu einer Delamination der Polymerschaumschicht von der thermoplastischen Folie führen, wodurch Undichtigkeiten entstehen können.

Eine Verringerung der Dicke d zwischen 30% und 50% ist insbesondere für Klebetreifen, die geschäumte Polymerschaumschichten auf Basis von Acrylaten vorteilhaft. So wird eine gute Dichtwirkung gewährleistet und eine Schädigung des Klebestreifens vermeiden.

Die Gehäusedichtung kann vorteilhaft weitergebildet werden, indem eine Länge I des ersten Endabschnitts und des zweiten Endabschnitts, in denen die erste Kantenfläche und die zweite Kantenfläche in Kontakt stehen, mindestens eine Breite b des Klebestreifens beträgt. Dadurch ist die Länge der in Kontakt stehenden Kantenflächen des Klebestreifens in einer Größe, die ein zuverlässiges Abdichten gewährleisten.

Die Aufgabe wird in ihrem zweiten Aspekt durch ein Verfahren zum automatisierten Applizieren einer Gehäusedichtung gelöst.

Das Verfahren umfasst die Schritte
a) Bereitstellen eines ersten Gehäuseelements,
b) Aufbringen eines elastischen Klebestreifens mittels eines robotergeführten Applikationskopfes entlang einer vorbestimmten Kontur auf dem ersten Gehäuseelement durch

Abfahren der Kontur und gleichzeitiges Abrollen und Andrücken eines Klebestreifenmaterials von einer Klebestreifenrolle,
Abtrennen des Klebestreifenmaterials am Ende der abgefahren Kontur durch den Applikationskopf, und
Ablegen des von dem Klebestreifenmaterial abgetrennten Klebestreifen auf dem ersten Gehäuseelement sodass eine erste Kantenfläche eines ersten Endabschnitts des Klebestreifens und eine zweite Kantenfläche eines zweiten Endabschnitts des Klebestreifens nebeneinanderliegend angeordnet sind,
wobei der Klebestreifen so durch den robotergeführten Applikationskopf auf dem ersten Gehäuseelement aufgebracht wird, dass eine erste Kantenfläche des Klebestreifens mit einer zweiten Kantenfläche des Klebestreifens in Kontakt steht und diese einen Dichtspalt ausbilden.

Durch die besondere Anordnung der Klebestreifen der Gehäusedichtung wird zum einen eine automatisierte Applikation mittels eines robotergeführten Applikationskopfes ermöglicht. Zum anderen wird erst dadurch, dass die Gehäusedichtung durch ein Klebestreifen realisiert werden kann, eine Applikation eines Endlosproduktes, durch einen robotergeführten Applikationskopf ermöglicht. Die erfindungsgemäße Anordnung der Gehäusedichtung hat somit besondere Vorteile in Bezug auf deren Applikation durch ein robotergeführten Applikationskopf.

Die Gehäusedichtung hat die im vorangegangenen aufgeführten Eigenschaften und Vorteile, weshalb diese an dieser Stelle nicht wiederholt werden.

Unter einer Kontur, soll ein vorbestimmter Verfahrweg eines robotergeführten Applikationskopfes verstanden werden. Unter einem Roboter ist jeder mehrachsige, mindestens zweiachsige, Roboter zu verstehen. Im einfachsten Fall handelt es sich um einen Plotter oder einen Portalroboter. Aber auch SCARAS oder fünf- und mehrachsige Industrieroboter sind im Sinne dieser Erfindung unter dem Begriff Roboter zu verstehen.

Unter einem Applikationskopf ist eine Vorrichtung zu verstehen, mit der ein Klebeband von einer Rolle abgerollt werden kann und der abgerollte Teil des Klebebands abgetrennt werden kann. Derartige Applikationsköpfe sind im Stand der Technik bekannt.

Das Verfahren kann vorteilhaft weitergebildet werden, indem der Applikationskopf bei dem Aufbringen so bewegt wird, dass ein Teil der Kantenfläche des Klebestreifens und ein Teil der zweiten Kantenfläche des Klebestreifens in Kontakt gebracht werden. Dadurch, dass die Kantenflächen des Klebestreifens bereits in Kontakt stehen, bevor der zweite Klebestreifen auf dem ersten Gehäuseelement abgesetzt wird, kann erreicht werden, dass sich die zweite Kantenfläche des Klebestreifens beim Ablegen auf dem ersten Gehäuseelement eng an der ersten Kantenfläche des Klebestreifens anschmiegt. Dadurch kann erreicht werden, dass eine Dichtwirkung zuverlässiger erzeugt wird. Der Applikationsprozess der Gehäusedichtung wird dadurch zuverlässiger und das Risiko von Undichtigkeiten verringert.

Die Anforderung an die Ausrichtung und Positionierung des robotergeführten Applikationskopfes verringern sich dadurch zudem, da sich der zweite Klebestreifen beim Ablegen "zurechtschiebt". Wichtig ist jedoch, dass der erste und zweite Endabschnitt des Klebestreifens in deren Längsrichtung überlappen, also nicht etwa einen Abstand voneinander aufweisend abgelegt werden, sodass nach dem Ablegen auf dem ersten Gehäuseelement ein Spalt oder eine Lücke zwischen erstem und zweitem Klebestreifen entsteht.

### Testmethoden

### Gelpermeationschromatographie zur Bestimmung des Molekulargewichts:

Die Angaben des Molekulargewichts in dieser Schrift beziehen sich auf die Bestimmung per Gelpermeationschromatographie. Die Bestimmung erfolgt an 100 µl klarfiltrierter Probe (Probenkonzentration 4 g/I). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Å, ID 8,0 mm 50 mm verwendet. Zur Auftrennung werden die Säulen des Typs PSS-SDV, 5 µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung).

### Dichtheitstest:

Eine erfindungsgemäße Gehäusedichtung wurde gemäß dem erfindungsgemäßen Verfahren auf einer ersten quadratischen Metallplatte (Außenmaße 80 mm x 80 mm x 5 mm) aufgeklebt. Der Klebestreifen wurden dabei so angeordnet, dass er eine geschlossene annährend quadratische Kontur in Form eines Quadrats bildet. Dabei traten die erste und zweite Kantenfläche des ersten und zweiten Endabschnitts des Klebestreifens in Kontakt. Im Inneren des Quadrats wurde anschließend eine Nachweispaste (KMnO₄ - Kaliumpermanganat) aufgetragen, die sich bei Kontakt mit Wasser deutlich Violett verfärbt. Eine identische Metallplatte wurde nun auf den Aufbau aufgelegt und verschraubt. Die Schrauben befanden sich außerhalb des Quadrats aus dem Klebestreifen; sie durchstießen also weder das Innere des Quadrats noch den Klebestreifen selbst. Durch 2 Stück je 1 mm starke Passscheiben wurde der Abstand der Metallplatten auf genau 2 mm eingestellt. Mit diesem Aufbau wurde sichergestellt, dass die wasserreaktive Paste in einem geschlossenen Raum (Gehäuseinneren) innerhalb des Klebestreifens ist. Ein Eindringen von Wasser würde durch eine Verfärbung zu erkennen sein und auf Undichtigkeit der Gehäusedichtung schließen lassen.

Die gesamte Probe wurde nun in ein Wasserbad getaucht, welches dann in einen Autoklav gelegt wurde. Zunächst wurde ein geringer Überdruck von 0,3 bar angelegt; in einer zweiten Prüfung simulierte ein Überdruck von 3 bar dann eine Wassersäule von 30 m. Nach 30-minütiger Lagerung unter Wasser im Autoklav, wurde der Überdruck abgelassen, der Verbund entnommen und auf Verfärbung des KMnO₄ untersucht. Eine Verfärbung indiziert Wasserdurchlässigkeit der Gehäusedichtung, keine Verfärbung indiziert Dichtheit gegen Wasser (Ergebnis "wasserdurchlässig Ja/Nein").

### Wiederablösbarkeit des verklebten Substrats (Simulation der Wiederablösung eines verklebten Batteriedeckels; reopenability):

Die Gehäusedichtung wurde mit einer stärker klebenden Seite der Klebestreifen (Unterseite der Klebestreifen) auf eine Aluminiumplatte (450 x 250 mm, 2,5 mm Dicke) in einem Abstand zum Plattenrand von 30 mm aufgebracht. Durch 2 Stück je 1 mm starke Passscheiben wurde der Abstand der Metallplatten auf genau 2 mm eingestellt und bildet eine Fuge. Anschließend wurde der Verbund mittels einer Schraubzwinge zusammengepresst. Die Aluminiumplatten wurden danach miteinander verschraubt, indem in den Ecken der Platten zu diesem Zweck vorhandene Löcher genutzt wurden.

Der so entstandene Verbund wurde für 10 Tage in einer Klimakammer bei 40°C und 100% relativer Luftfeuchte gelagert. Nach der Entnahme wurde er für 24 h bei 23°C und 50% relativer Feuchte rekonditioniert.

Anschließend wurden die Schrauben und Passscheiben entfernt und auf einer der kürzeren Seiten ein Spanngurt in die Fuge eingebracht, der mit einer Prüfmaschine (Zwick) verbunden war. Die obere (1 mm dicke) Platte wurde mit einer Geschwindigkeit von 300 mm/min in einem Winkel von 90° von der Gehäusedichtung abgezogen, die dazu benötigte Maximalkraft wurde gemessen. In Tabelle 1 ist der Mittelwert aus drei Messungen angegeben.

Für die Tests der Dichtheit und der Wiederablösbarkeit wurden die Klebestreifen durch Ablängen von den folgenden Klebestreifenmaterialien bereitgestellt:
A - tesa^{®} 61102 (geschlossenzelliger EPDM-Kautschuk-Schaum, einseitig mit einer Acrylat-Klebmasse beschichtet, Gesamtdicke 3.200 µm; tesa)
B - tesa^{®} ACX^{plus} 70730 High Resistance (doppelseitiges Acrylat-Schaumtape, beidseitig mit Acrylat-Haftklebmasse beschichtet, Gesamtdicke 2.900 µm; tesa), einseitig mit einer thermoplastischen Polyurethanfolie (Platilon^{®} U04/PE, 30 µm; Bayer) laminiert
C - tesa^{®} ACX^{plus} 70730 High Resistance, wobei die Acrylat-Haftklebmasse nur einseitig aufgebracht war, auf einer Seite also der Acrylatschaum freilag (siehe B, Gesamtdicke 2.850 µm; tesa)
D - tesa^{®} 92111 HiP - High initial Performance, 3x auf sich selbst verklebt, Gesamtdicke 3.300 µm; tesa); einseitig mit einer thermoplastischen Polyurethanfolie (Platilon^{®} U04/PE, 30 µm; Bayer) laminiert
E - tesa^{®} ACX^{plus} 70730 High Resistance (doppelseitiges Acrylat-Schaumtape, beidseitig mit Acrylat-Haftklebmasse beschichtet, Gesamtdicke 2.900 µm; tesa); Vergleichsbeispiel

**Tabelle 1: Testergebnisse**

| Klebestreifen aus Klebeband | Wasserdurchlässigkeit bei 0,3 bar | Wasserdurchlässigkeit bei 3 bar | Wiederablösbarkeit |
|---|---|---|---|
| A | Nein | Ja | |
| B | Nein | Nein | Messung nicht benötigt, die Verklebung ließ sich sehr einfach von Hand lösen |
| C | Nein | Nein | 148 N |
| D | Nein | Nein | Messung nicht benötigt, die Verklebung ließ sich sehr einfach von Hand lösen |
| E (Vgl.) | Nein | Nein | > 500 N |

| | | | |
|---|---|---|---|
| Vgl. = Vergleichsbeispiel | | | |

Die Erfindung wird anhand verschiedener Ausführungsbeispiele in neun Figuren beschrieben. Dabei zeigen:
- Fig. 1: Schematische Darstellung der Gehäusedichtung
- Fig. 2 a) - b): Schnitt durch die Gehäusedichtung
- Fig. 3: Definition der Seiten und Richtungen eines Klebestreifens
- Fig. 4: Definition der Seiten und Richtungen eines Klebestreifens
- Fig. 5: Schichtaufbau der elastischen Klebestreifen gemäß einer ersten Variante
- Fig. 6: Schichtaufbau der elastischen Klebestreifen gemäß einer zweiten Variante
- Fig. 7: Schichtaufbau der elastischen Klebestreifen gemäß einer dritten Variante
- Fig. 8 a) - d): Varianten der Anordnung der Gehäusedichtung
- Fig. 9: Beispielhafte Darstellung eines Gehäuses mit mehrteiliger Gehäusedichtung

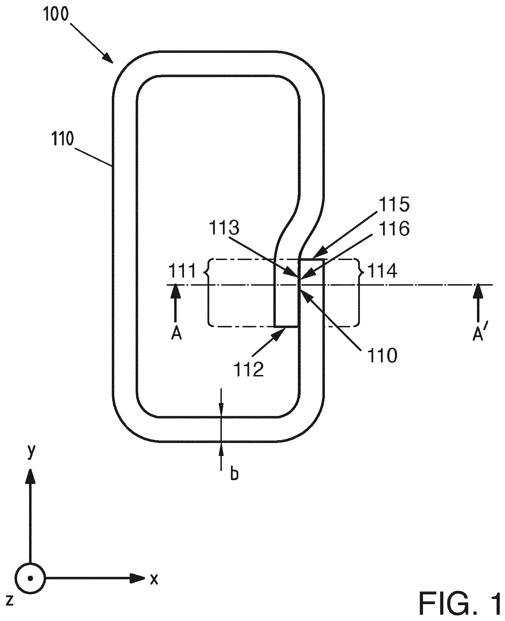

Figur 1 stellt schematisch eine Draufsicht auf die Anordnung der erfindungsgemäßen Gehäusedichtung 100 dar. Ein Klebestreifen 110 ist auf einem ersten Gehäuseelement 1 (nicht dargestellt) aufgeklebt. Dabei bildet der Klebestreifen einen nahezu Umlauf. Die erste und zweite Stirnseite 112 und 115 des Klebestreifens 110 sind so angeordnet, dass sie aneinander vorbeigeführt sind und sich nicht berühren. In einem ersten Endabschnitt 111 des Klebestreifens 110 und in einem zweiten Endabschnitt 114 des Klebestreifens stehen die erste Kantenfläche 113 des Klebestreifens 110 und die zweite Kantenfläche 116 des ersten Klebestreifens 110 in Kontakt und bilden den Dichtspalt 10.

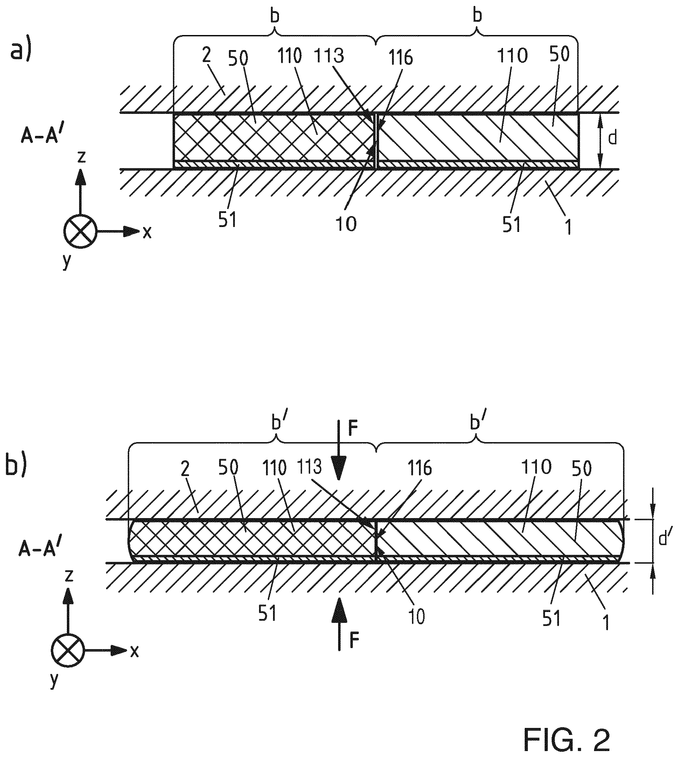

Figur 2 stellt einen Schnitt durch die Gehäusedichtung dar. Der Schnitte liegt in der Ebene AA' - Figuren 2 a) und b). Die Position der Schnitteben ist auch in der Figur 1 eingezeichnet.

In Figur 2 a) ist ein Schnitt in der Schnittebene AA' durch den elastischen Klebestreifen 110 im Bereich des ersten und zweiten Endabschnitts 111 und 114 dargestellt. Dabei ist der Klebestreifen 110, mittels der Haftklebmasseschicht 51 auf dem ersten Gehäuseelement 1 aufgeklebt. Die Figur 2 a) zeigt die Gehäusedichtung, also nach einem Applikationsvorgang durch einen Applikationskopf. Zudem ist das zweite Gehäuseelement 2 auf die Oberseite des ersten und zweiten Klebstreifens aufgelegt. Die Oberseite des Klebstreifens wird in dieser Ausführung durch die Oberseite der Polymerschaumschicht 50 der Klebestreifen 110gebildet.

Die Kantenfläche 113 und 116 des elastischen Klebestreifens 110stehen miteinander in Kontakt oder die Kantenflächen 113 und 116 liegen sich zumindest gegenüber und berühren sich nicht oder nur teilweise. Zwischen den Kantenflächen 113 und 116 wird der Dichtspalt 10 ausgebildet. Das erste und zweite Gehäuseelement 1, 2 sind durch die Dicke d des Klebestreifens voneinander beabstandet.

In Figur 2 b) ist dieselbe Schnittebene AA' wie in Figur 2 a) dargestellt, mit dem Unterschied, dass eine Kraft F auf die Gehäuseelemente 1 und 2 einwirkt. Dadurch wird der elastische Klebestreifen 110 gestaucht und der Abstand der Gehäuseelemente 1 und 2 verringert sich auf den Abstand d' (d > d'). Insbesondere wird die Polymerschaumschicht 50 des Klebestreifens komprimiert und dessen Material gestaucht. Durch die Krafteinwirkung mit der Kraft F expandieren die Polymerschaumschichten 50 des ersten und zweiten elastischen Klebestreifens 110 in Richtung der Kantenflächen. Dies ist durch die Wölbung der Kantenflächen angedeutet. Die erste und zweite Kantenfläche 113, 116 können nicht oder kaum expandieren oder sich aufwölben, da diese Kantenflächen bereits in Kontakt stehen. Vielmehr wirkt durch die Expansion eine Kraft und eine Gegenkraft auf die erste und zweite Kantenfläche 113, 116, wodurch die erste und zweite Kantenfläche 113, 116 gegeneinandergepresst werden und den Dichtspalt 10 abdichten.

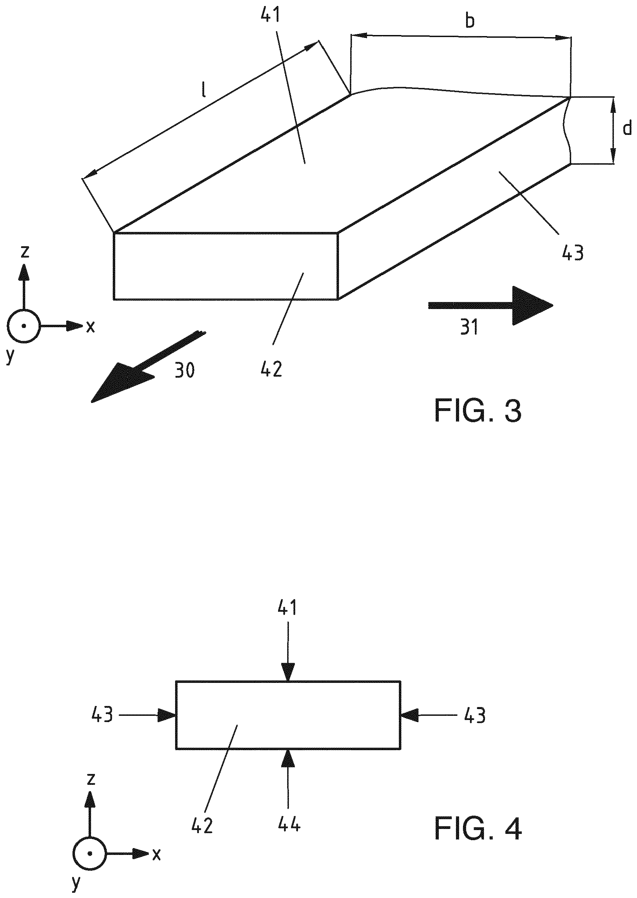

In Figur 3 sind die Seiten und Richtungen eines Klebestreifens 110 dargestellt. Die Oberseite 41 des Klebestreifens ist im Wesentlichen senkrecht zu der Stirnseite 42 und der Kantenflächen 43 angeordnet. Die Längsrichtung des Klebestreifens erstreckt sich in Richtung der Länge l der Klebestreifen und ist senkrecht zu der Querrichtung 31 des Klebestreifens. Teile der Kantenflächen 43 bilden den Dichtspalt 10 (nicht dargestellt), wenn der elastische Klebestreifen in Richtung der Querrichtung expandiert, wenn der Klebestreifen gestaucht wird. Die Klebestreifen weisen die Dicke d, die Breite b und die Länge l auf.

Figur 4 stellt eine stirnseitige Draufsicht auf die Stirnseite 42, 112, 115 eines Klebestreifens dar. Die Stirnseiten eines Klebestreifens werden durch das Abtrennen von einem Klebeband erzeugt. Die Unterseite 44 ist der Oberseite 41 gegenüberliegend angeordnet.

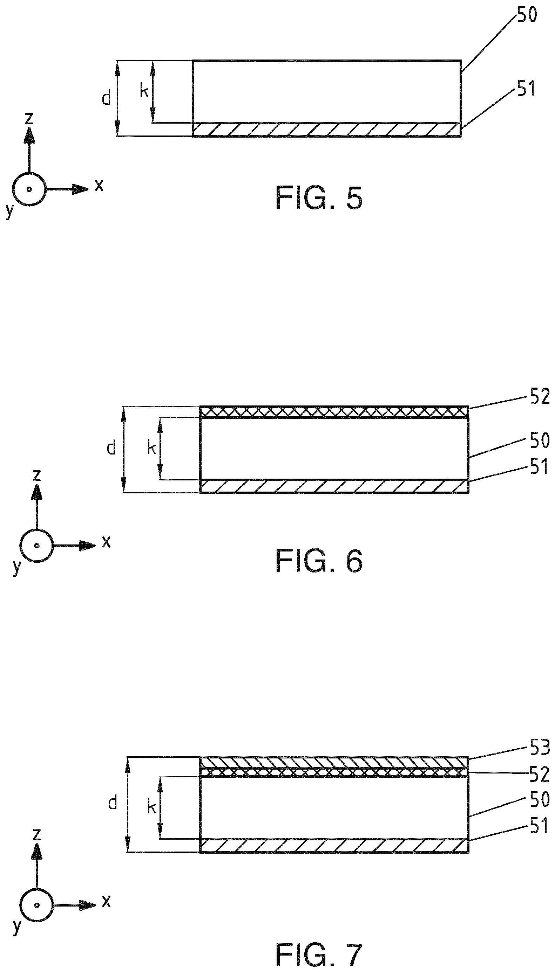

Figur 5 stellt einen ersten bevorzugten Schichtaufbau eines elastischen Klebestreifens 110 dar. Die Polymerschaumschicht 50 weist auf der Unterseite eine Haftklebmasseschicht 51 auf. Die Polymerschamschicht hat die Dicke k und der gesamte Klebestreifen die Dicke d.

Figur 6 stellt einen zweiten bevorzugten Schichtaufbau eines elastischen Klebestreifens 110. Die Polymerschaumschicht 50 weist wie in Figur 5 auf der Unterseite eine Haftklebmasseschicht 51 auf. Auf der Oberseite, also der, der ersten Seite der Polymerschaumschicht gegenüberliegenden zweiten Seite, ist eine weitere Haftklebmasseschicht 52 vorgesehen. Die Klebkraft der weiteren Haftklebmasseschicht 52 ist geringer als die Klebkraft der Haftklebmasseschicht 51. Die Polymerschamschicht 50 hat die Dicke k und der gesamte Klebestreifen 110 die Dicke d. Bei dieser zweiten Variante wird also eine Gehäusedichtung 100 erzeugt, bei der die Klebkräfte asymmetrisch auf der Oberseite und der Unterseite des Klebestreifens 110 ist.

Figur 7 stellt einen dritten bevorzugten Schichtaufbau eines elastischen Klebestreifens 110 dar. Die Polymerschaumschicht 50 weist wie in Figur 5 und 6 auf der Unterseite eine Haftklebmasseschicht 51 auf. Auf der Oberseite, also der, der ersten Seite der Polymerschaumschicht gegenüberliegenden zweiten Seite, ist eine weitere Haftklebmasseschicht 52 vorgesehen. Die Klebkraft der weitern Haftklebmasseschicht 52 kann geringer, gleich oder größer als die Klebkraft der Haftklebmasseschicht 51 sein. Auf der weiteren Haftklebmasseschicht 52 ist eine thermoplastische Folie 53 aufgebracht. Die Polymerschamschicht hat die Dicke k und der gesamte Klebestreifen die Dicke d. Bei dieser dritten Variante wird also eine Gehäusedichtung 100 mit einseitig nicht-klebenden Eigenschaften erzeugt.

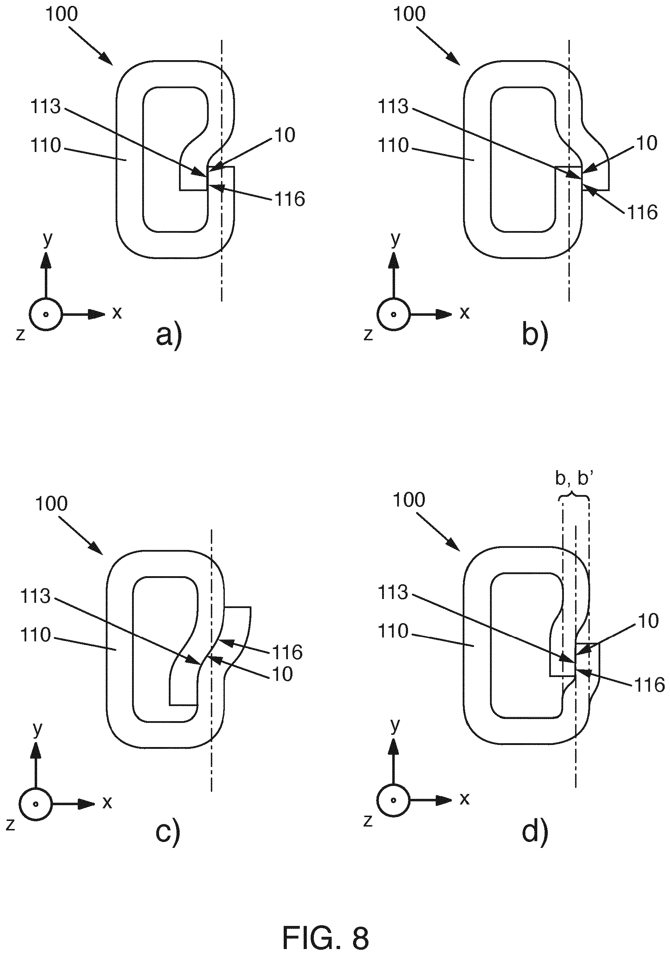

Die Figuren 8 a) bis d) stellen schematisch und beispielhaft vier bevorzugte Varianten der Gehäusedichtung 100 dar. Der Verlauf des ersten Klebestreifens 110 ist dabei exemplarisch gewählt und soll keinesfalls beschränkend gewertet werden. Der tatsächliche Verlauf, also die Kontur auf der der erste Klebestreifen aufgebracht wird, kann beleibeige andere Verläufe beschreiben. Lediglich die erste und zweite Kantenfläche 113 und 116 sollen im Wesentlichen gegenüberliegend angeordnet sein.

Die Figuren 8 a) und b) stellen jeweils erfindungsgemäße Gehäusedichtungen dar, wobei in Figur 8 a) der erste Endabschnitt 111 in dem Gehäuseinneren angeordnet wird. Diese Anordnung hat den Vorteil, dass eine vergleichsweise gerade umlaufende Außenkante erzeugt werden kann, die nur durch einen kurzen Abschnitt unterbrochen ist. Wirkt die Kraft F auf das erste und zweite Gehäuseelement 1, 2 (nicht dargestellt) ein, wird der Dichtspalt 10 abgedichtet.

In Figur 8 b) ist eine Gehäusedichtung 100 dargestellt, bei der der zweite Endabschnitt 114 außerhalb des durch den Klebestreifen 110 gebildeten Umlaufs angeordnet ist (Gehäuseäußeren). Wirkt die Kraft F auf das erste und zweite Gehäuseelement 1, 2 (nicht dargestellt) ein, wird der Dichtspalt 10 abgedichtet. Diese Anordnung hat den Vorteil, dass der Innenbereich, der von der Dichtung umschlossen wird, nicht durch den zweiten Endabschnitt eingeschränkt wird.

Figur 8 c) stellt eine Kombination der Varianten aus den Figuren 8 a) und 8 b) dar. Ausgehend von Figur 8 a) kann der Endabschnitt 114 nach außen geführt werden, wie in Figur 8 b). Diese Anordnung lässt sich ebenso gut automatisiert mit dem erfindungsgemäßen Verfahren auf einem Gehäuseelement (nicht dargestellt) aufbringen. Der Vorteil dieser Anordnung der Gehäusedichtung 100 besteht darin, dass der Dichtspalt verlängert wird, wodurch die Dichtheit gegenüber größeren Drücken erreicht werden kann. Wirkt die Kraft F auf das erste und zweite Gehäuseelement 1, 2 (nicht dargestellt) ein, Dichtspalt 10 abgedichtet.

In Figur 8 d) ist eine Gehäusedichtung 100 dargestellt, die an den gegenüberliegenden Endabschnitten 111 und 114 eine geringere Breite, wie die Variante in Figur 8 c) benötigt. Sie ist somit schmaler, hat ansonsten jedoch die gleichen Vorteile, wie die in Figur 8 c) dargestellte Variante.

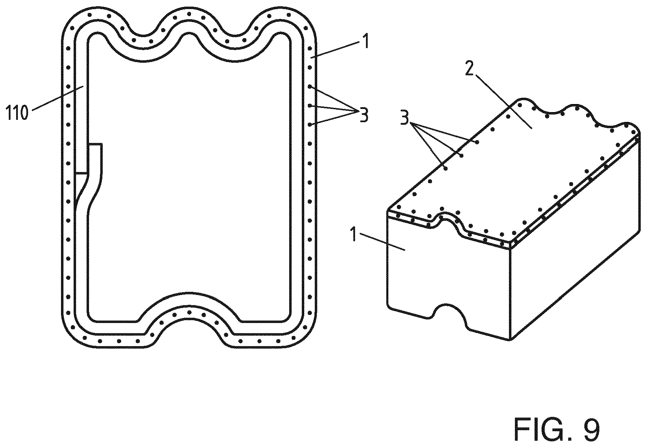

In Figur 9 ist exemplarisch eine Anwendung der Gehäusedichtung 100 dargestellt. Der Klebestreifen 110 ist erfindungsgemäß auf einem ersten Gehäuseelement 1 aufgebracht. Das erste Gehäuseelement 1 ist hier eine Gehäusewanne. Das zweite Gehäuseelement 2 ist ein Deckel, der mittels Verbindungselementen 3, z. B. Schrauben, Spangen oder Nieten, mit der Gehäusewanne verbunden wird, wodurch die Kraft F auf die Gehäusedichtung 100 wirkt und der Klebestreifen 110 gestaucht wird. Solch ein Gehäuse kann beispielsweise ein Schutzgehäuse für Batteriemodule sein.

### Bezugszeichenliste

- 1: erstes Gehäuseelement
- 2: zweites Gehäuseelement
- 3: Verbindungselemente
- 10: Dichtspalt
- 30: Längsrichtung
- 31: Querrichtung
- 41: Oberseite
- 42: Stirnseite
- 43: Kantenfläche
- 44: Unterseite
- 50: Polymerschaumschicht
- 51: Haftklebmasseschicht
- 52: weitere Haftklebmasseschicht (schwach-klebende Schicht)
- 53: thermoplastische Folie
- 100: Gehäusedichtung
- 110: elastischer Klebestreifen
- 111: erster Endabschnitt
- 112: erste Stirnseite
- 113: erste Kantenfläche
- 114: zweiter Endabschnitt
- 115: zweite Stirnseite
- 116: zweite Kantenfläche

## Patentansprüche

1. Gehäuse umfassend
- ein erstes Gehäuseelement (1),
- ein zweites Gehäuseelement (2), und
- eine zwischen dem ersten Gehäuseelement und dem zweiten Gehäuseelement angeordnete Gehäusedichtung (100) zur Abdichtung eines Gehäuseinneren gegenüber einem Gehäuseäußeren,
umfassend einen
elastischen Klebestreifen (110) der zwischen einem ersten Gehäuseelement (1) und einem zweiten Gehäuseelement (2) angeordnet ist,
**dadurch gekennzeichnet, dass**
- der Klebestreifen (110) einen ersten Endabschnitt (111) mit einer ersten Kantenfläche (113) und einen zweiten Endabschnitt (114) mit einer zweiten Kantenfläche (116) umfasst, und derart zwischen dem ersten Gehäuseelement (1) und dem zweiten Gehäuseelement (2) angeordnet ist, dass
∘ die erste und zweite Kantenfläche (113, 116) im Wesentlichen in einer Ebene liegen, und
∘ der Klebestreifen (110) zwischen dem ersten Gehäuseelement (1) und dem zweiten Gehäuseelement (2) in einem geschlossenen Umlauf angeordnet ist, und
∘ die erste Kantenfläche (113) des Klebestreifens (110) mit der zweiten Kantenfläche (116) des Klebestreifens (110) in Kontakt steht und einen Dichtspalt (10) bildet,
sodass, wenn
das erste Gehäuseelement (1) und das zweite Gehäuseelement (2) mit einer Kraft F gegeneinandergepresst werden, der elastische Klebestreifen (110) gestaucht wird und dieser in Richtung der Kantenflächen (113, 116) expandiert, wodurch
die erste Kantenfläche (113) des Klebestreifens (110) und die zweite Kantenfläche (116) des Klebestreifens (110) gegeneinandergepresst werden und den Dichtspalt (10) abdichten, wodurch eine Fluidkommunikation zwischen dem Gehäuseinneren und dem Gehäuseäußeren unterbunden wird.

2. Gehäuse nach Anspruch 1,
**dadurch gekennzeichnet, dass** eine Längsrichtung eines ersten Endabschnitts (111) des Klebestreifens und eine Längsrichtung eines zweiten Endabschnitts (114) des Klebestreifens zumindest abschnittsweise parallel verlaufen.

3. Gehäuse nach Anspruch 1 oder 2, **dadurch gekennzeichnet, dass** der Klebestreifen (110) eine Polymerschaumschicht (50) umfasst und eine erste Seite (44) der Polymerschaumschicht (50) eine Haftklebmasseschicht (51) aufweist.

4. Gehäuse nach Anspruch 3, **dadurch gekennzeichnet, dass** die Polymerschaumschicht (50) selbst eine Haftklebmasse ist, insbesondere ein haftklebriger acrylatbasierter Polymerschaum ist.

5. Gehäuse nach Anspruch 3 oder 4, **dadurch gekennzeichnet, dass** der Klebestreifen (110) eine weitere Haftklebmasseschicht (52) umfasst, wobei die weitere Haftklebmasseschicht (52) auf einer zweiten Seite (41) der Polymerschaumschicht (50) aufgebracht ist, und die zweite Seite (41) der ersten Seite (44) gegenüberliegt.

6. Gehäuse nach einem der Ansprüche Anspruch 3 bis 5, **dadurch gekennzeichnet, dass** eine zweite Seite (41) der Polymerschaumschicht (50), die der ersten Seite (44) gegenüberliegt, eine thermoplastische Folie (53) aufweist oder die thermoplastische Folie (53) auf der weiteren Haftklebmasseschicht (52) aufgebracht ist.

7. Gehäuse nach einem der vorhergehenden Ansprüche, **dadurch gekennzeichnet, dass** der Klebestreifen (110) ein Klebeband aus einer acrylatbasierten Klebmasse besteht.

8. Gehäuse nach einem der vorhergehenden Ansprüche, **dadurch gekennzeichnet, dass**, wenn das erste Gehäuseelement (1) und das zweite Gehäuseelement (2) mit einer Kraft F gegeneinandergepresst werden, die Dicke d des Klebestreifens (110) um 30% bis 50% verringert wird.

9. Gehäuse nach einem der vorhergehenden Ansprüche, **dadurch gekennzeichnet, dass** eine Länge l des ersten Endabschnitts (111) und des zweiten Endabschnitts (114), in denen die erste Kantenfläche (113) und die zweite Kantenfläche (116) in Kontakt stehen, mindestens eine Breite b des Klebestreifens beträgt.

10. Verfahren zum automatisierten Applizieren einer Gehäusedichtung (100) an einem Gehäuse gemäß einem der Ansprüche 1- 9, umfassend die Schritte
a) Bereitstellen eines ersten Gehäuseelements (1),
b) Aufbringen eines elastischen Klebestreifens (110) mittels eines robotergeführten Applikationskopfes entlang einer vorbestimmten Kontur auf dem ersten Gehäuseelement (1) durch
- Abfahren der Kontur und gleichzeitiges Abrollen und Andrücken eines Klebestreifenmaterials von einer Klebestreifenrolle,
- Abtrennen des Klebestreifenmaterials am Ende der abgefahren Kontur durch den Applikationskopf, und
- Ablegen des von dem Klebestreifenmaterial abgetrennten Klebestreifen (110) auf dem ersten Gehäuseelement sodass eine erste Kantenfläche (113) eines ersten Endabschnitts (111) des Klebestreifens (110) und eine zweite Kantenfläche (116) eines zweiten Endabschnitts (114) des Klebestreifens (110) nebeneinanderliegend angeordnet sind,
wobei der Klebestreifen (110) so durch den robotergeführten Applikationskopf auf dem ersten Gehäuseelement (1) aufgebracht wird, dass eine erste Kantenfläche (113) des Klebestreifens (110) mit einer zweiten Kantenfläche (116) des Klebestreifens (110) in Kontakt steht und diese einen Dichtspalt (10) ausbilden.

11. Verfahren nach Anspruch 10,
**dadurch gekennzeichnet, dass** der Applikationskopf bei dem Aufbringen so bewegt wird, dass ein Teil der Kantenfläche (113) des Klebestreifens (110) und ein Teil der zweiten Kantenfläche (116) des Klebestreifens (110) in Kontakt gebracht werden.

## Claims

1. Housing comprising
- a first housing element (1),
- a second housing element (2), and
- a housing seal (100), arranged between the first housing element and the second housing element, for sealing off a housing interior from a housing exterior, comprising an
elastic adhesive strip (110) which is arranged between a first housing element (1) and a second housing element (2),
**characterized in that**
- the adhesive strip (110) comprises a first end portion (111) having a first edge face (113), and a second end portion (114) having a second edge face (116), and is arranged between the first housing element (1) and the second housing element (2) in such a way that
∘ the first and second edge faces (113, 116) lie substantially in a plane, and
∘ the adhesive strip (110) is arranged between the first housing element (1) and the second housing element (2) in a closed circulation, and
∘ the first edge face (113) of the adhesive strip (110) is in contact with the second edge face (116) of the adhesive strip (110) and forms a sealing gap (10), so that if
the first housing element (1) and the second housing element (2) are pressed against one another with a force F, the elastic adhesive strip (110) is compressed and it expands in the direction of the edge faces (113, 116), with the effect that
the first edge face (113) of the adhesive strip (110) and the second edge face (116) of the adhesive strip (110) are pressed against one another and seal off the sealing gap (10), thereby preventing fluid communication between the housing interior and the housing exterior.

2. Housing according to Claim 1,
**characterized in that** a longitudinal direction of a first end portion (111) of the adhesive strip and a longitudinal direction of a second end portion (114) of the adhesive strip run parallel at least in portions.

3. Housing according to Claim 1 or 2, **characterized in that** the adhesive strip (110) comprises a polymer foam layer (50), and a first side (44) of the polymer foam layer (50) has a pressure sensitive adhesive layer (51).

4. Housing according to Claim 3, **characterized in that** the polymer foam layer (50) itself is a pressure sensitive adhesive, more particularly a pressure sensitively adhesive acrylate-based polymer foam.

5. Housing according to Claim 3 or 4, **characterized in that** the adhesive strip (110) comprises a further pressure sensitive adhesive layer (52), where a second side (41) of the polymer foam layer (50) bears the applied further pressure sensitive adhesive layer (52), and the second side (41) is opposite the first side (44).

6. Housing according to any of Claims 3 to 5, **characterized in that** a second side (41) of the polymer foam layer (50), which is opposite the first side (44), has a thermoplastic film (53), or the further pressure sensitive adhesive layer (52) bears the applied thermoplastic film (53).

7. Housing according to any of the preceding claims, **characterized in that** the adhesive strip (110) consists of an adhesive tape composed of an acrylate-based adhesive.

8. Housing according to any of the preceding claims, **characterized in that** if the first housing element (1) and the second housing element (2) are pressed against one another with a force F, the thickness d of the adhesive strip (110) is reduced by 30% to 50%.

9. Housing according to any of the preceding claims, **characterized in that** a length l of the first end portion (111) and of the second end portion (114) in which the first edge face (113) and the second edge face (116) are in contact amounts to at least one width b of the adhesive strip.

10. Method for automated application of a housing seal (100) to a housing according to any of Claims 1-9, comprising the steps of
a) providing a first housing element (1),
b) applying an elastic adhesive strip (110) by means of a robot-guided application head along a predetermined contour on the first housing element (1) by
- travelling the contour and at the same time unwinding and pressing-on an adhesive strip material from an adhesive strip roll,
- removing the adhesive strip material at the end of the travelled contour by the application head, and
- depositing the adhesive strip (110) removed from the adhesive strip material on the first housing element, so that a first edge face (113) of a first end portion (111) of the adhesive strip (110) and a second edge face (116) of a second end portion (114) of the adhesive strip (110) are arranged adjacent to one another,
where the adhesive strip (110) is applied by the robot-guided application head on the first housing element (1) such that a first edge face (113) of the adhesive strip (110) is in contact with a second edge face (116) of the adhesive strip (110) and they form a sealing gap (10).

11. Method according to Claim 10,
**characterized in that** the application head during application is moved such that a part of the edge face (113) of the adhesive strip (110) and a part of the second edge face (116) of the adhesive strip (110) are brought into contact.

## Revendications

1. Boîtier comprenant
- un premier élément de boîtier (1),
- un deuxième élément de boîtier (2) et
- un joint de boîtier (100) disposé entre le premier élément de boîtier et le deuxième élément de boîtier pour étanchéifier un intérieur de boîtier par rapport à un extérieur de boîtier,
comprenant une
bande adhésive élastique (110) disposée entre un premier élément de boîtier (1) et un deuxième élément de boîtier (2),
**caractérisé en ce que**
- la bande adhésive (110) comprend une première portion d'extrémité (111) comportant une première surface de bord (113) et une deuxième portion d'extrémité (114) comportant une deuxième surface de bord (116), et est disposée entre le premier élément de boîtier (1) et le deuxième élément de boîtier (2) de telle sorte que
○ les première et deuxième surfaces de bord (113, 116) soient sensiblement dans un plan, et
○ la bande adhésive (110) entre le premier élément de boîtier (1) et le deuxième élément de boîtier (2) soit disposée en une boucle fermée, et
○ la première surface de bord (113) de la bande adhésive (110) soit en contact avec la deuxième surface de bord (116) de la bande adhésive (110) et forme un jeu d'étanchéité (10),
de sorte que, lorsque
le premier élément de boîtier (1) et le deuxième élément de boîtier (2) sont pressés l'un contre l'autre avec une force F, la bande adhésive (110) élastique est comprimée et s'étend en direction des surfaces de bord (113, 116), ce par quoi
la première surface de bord (113) de la bande adhésive (110) et la deuxième surface de bord (116) de la bande adhésive (110) sont pressées l'une contre l'autre et scellent le jeu d'étanchéité (10), ce par quoi une communication fluidique entre l'intérieur du boîtier et l'extérieur du boîtier est évitée.

2. Boîtier selon la revendication 1,
**caractérisé en ce qu'**une direction longitudinale d'une première portion d'extrémité (111) de la bande adhésive et une direction longitudinale d'une deuxième portion d'extrémité (114) de la bande adhésive s'étendent au moins par tronçons parallèlement.

3. Boîtier selon la revendication 1 ou 2, **caractérisé en ce que** la bande adhésive (110) comprend une couche de mousse de polymère (50) et une première face (44) de la couche de mousse de polymère (50) comprend une couche de masse autoadhésive (51).

4. Boîtier selon la revendication 3, **caractérisé en ce que** la couche de mousse de polymère (50) est elle-même une masse autoadhésive, en particulier une mousse de polymère à base d'acrylate autoadhésive.

5. Boîtier selon la revendication 3 ou 4, **caractérisé en ce que** la bande adhésive (110) comprend une autre couche de masse autoadhésive (52), l'autre couche de masse autoadhésive (52) étant appliquée sur une deuxième face (41) de la couche de mousse de polymère (50), et la deuxième face (41) fait face à la première face (44).

6. Boîtier selon l'une quelconque des revendications 3 à 5, **caractérisé en ce qu'**une deuxième face (41) de la couche de mousse de polymère (50), qui fait face à la première face (44), présente une feuille thermoplastique (53) ou la feuille thermoplastique (53) est appliquée sur l'autre couche de masse autoadhésive (52).

7. Boîtier selon l'une quelconque des revendications précédentes, **caractérisé en ce que** la bande adhésive (110) est constituée d'un ruban adhésif composé d'une masse adhésive à base d'acrylate.

8. Boîtier selon l'une quelconque des revendications précédentes, **caractérisé en ce que** lorsque le premier élément de boîtier (1) et le deuxième élément de boîtier (2) sont pressés l'un contre l'autre avec une force F, l'épaisseur d de la bande adhésive (110) est réduite de 30 % à 50 %.

9. Boîtier selon l'une quelconque des revendications précédentes, **caractérisé en ce qu'**une longueur l de la première partie d'extrémité (111) et de la deuxième partie d'extrémité (114), dans lesquelles la première surface de bord (113) et la deuxième surface de bord (116) sont en contact, est au moins une largeur b de la bande adhésive.

10. Procédé pour l'application automatisée d'un joint de boîtier (100) sur un boîtier selon l'une quelconque des revendications 1 à 9, comprenant les étapes suivantes
a) fourniture d'un premier élément de boîtier (1),
b) application d'une bande adhésive (110) élastique au moyen d'une tête d'application guidée par robot le long d'un contour prédéterminé sur le premier élément de boîtier (1)
- parcours du contour et déroulement et pressage simultanés d'un matériau de bande adhésive depuis un rouleau de bande adhésive,
- séparation du matériau de bande adhésive à l'extrémité du contour parcouru à travers la tête d'application, et
- placement de la bande adhésive (110) séparée du matériau de bande adhésive sur le premier élément de boîtier de sorte qu'une première surface de bord (113) d'une première portion d'extrémité (111) de la bande adhésive (110) et une deuxième surface de bord (116) d'une deuxième portion d'extrémité (114) de la bande adhésive (110) soient disposées côte-à-côte,
la bande adhésive (110) étant appliquée par l'intermédiaire de la tête d'application guidée par robot sur le premier élément de boîtier (1) de telle sorte qu'une première surface de bord (113) de la bande adhésive (110) soit en contact avec une deuxième surface de bord (116) de la bande adhésive (110) et que celles-ci forment un jeu d'étanchéité (10).

11. Procédé selon la revendication 10,
**caractérisé en ce que** la tête d'application est déplacée lors de l'application de telle sorte qu'une partie de la surface de bord (113) de la bande adhésive (110) et une partie de la deuxième surface de bord (116) de la bande adhésive (110) soient mises en contact.
